# EUROPEAN PATENT APPLICATION

(11) **EP 1 369 944 A2**
(43) Date of publication of application: **10.12.2003**
(21) Application number: 03003930.9
(22) Date of filing: 21.02.2003
(51) Int. Cl.: H01M 8/04

(54) **Control of fuel cell power plant**

(30) Priority: 03.04.2002 JP 2002100999
(71) Applicant: Nissan Motor Co., Ltd., Yokohama-shi, Kanagawa (JP)
(72) Inventor: Yoshizawa, Koudai, Yokosuka-shi, Kanagawa (JP)
(74) Representative: Weber, Joachim, Dr.

(57) **Abstract**

A humidifier (12) humidifies hydrogen and air which are to be supplied to a fuel cell stack (11) of a fuel cell power plant by using water from a water tank (14). When starting the fuel cell power plant, the temperature of the fuel cell stack (11) is detected by a temperature sensor (22) in order to determine whether or not the fuel cell stack (11) is in a frozen state. When the fuel cell stack (11) is in the frozen state, it is warmed without warming up the water tank (14). When the fuel cell stack (11) is warmed up, the fuel cell stack (11) starts power generation with the gas that is not humidified. After thawing of the water tank (14) using heat produced by power generation by the fuel cell stack (11) is performed, the humidifier (12) starts humidification of hydrogen and air.

## Description

### FIELD OF THE INVENTION

This invention relates to start-up of a fuel cell power plant at below freezing point.

### BACKGROUND OF THE INVENTION

A fuel cell power plant is provided with a fuel cell stack that is a laminated body of plural fuel cells. The fuel cell uses a membrane electrolyte to generate power from electrochemical reactions mediated by hydrogen (H₂) supplied to an anode and oxygen (O₂) supplied to a cathode.

In this fuel cell, the membrane electrolyte must be normally maintained in a humidified state in order to promote preferred electrochemical reactions. For this purpose, the oxygen and hydrogen supplied to the fuel cell stack are humidified in advance using water. Consequently when starting the power plant, it is necessary to warm up water used for humidifying operations in order to transform the water into a state for humidification, in other words, to transform the water into steam.

JP2000-173638 published by the Japanese Patent Office in 2000 discloses a technique of shortening the plant start-up time. This is enabled by dividing the fuel cell stack into a power generation section which has a large heat capacity and a power generation section which has a small heat capacity. Initially only the membrane electrolyte of the power generation section which has the small heat capacity is heated.

JP2000-082481 published by the Japanese Patent Office in 2000 discloses a humidifying device provided with an external water tank at ambient temperature and a water tank for heating operations provided in the fuel cell stack. Since the fuel cell stack generates large amounts of heat during power generation operations, the generation of steam for humidifying operations is promoted using the generated heat to heat the water in the high-temperature water tank.

### SUMMARY OF THE INVENTION

Neither of the prior art techniques disclose a start-up method for the plant adapted for use when the moisture in the fuel cell power plant including the water tank for humidifying operations becomes frozen at temperatures below freezing point. It is possible to heat the frozen moisture using a heater until the frozen moisture is thawed out. However this would entail the consumption of large amounts of energy.

It is therefore an object of this invention to start up the fuel cell power plant in a short time when moisture in the fuel cell power plant has frozen while minimizing energy consumption.

In order to achieve the above object, this invention provides a fuel cell power plant comprising a fuel cell stack performing power generation in response to a supply of gaseous material, a humidifier humidifying the gaseous material;

a water tank supplying water for humidification to the humidifier, and a warming-up circuit capable of independently warming up the fuel cell stack and the water tank. The fuel cell power plant further comprises a sensor detecting a parameter related to a frozen state and a non -frozen state of the fuel cell stack and a controller functioning to determine whether the fuel cell stack is in the frozen state or in the non-frozen state based on the parameter, cause the warming-up circuit to warm up the fuel cell stack and not to warm up the water tank, when the fuel cell stack is in the frozen state, and cause the fuel cell stack to start power generation while preventing the water tank from supplying water for humidification to the humidifier, when the fuel cell stack has been warmed up to the non-frozen state.

This invention also provides a control method for such a fuel cell power plant that comprises a fuel cell stack performing power generation in response to a supply of gaseous material, a humidifier humidifying the gaseous material, a water tank supplying water for humidification to the humidifier, and a warming-up circuit capable of independently warming up the fuel cell stack and the water tank. The control method comprises detecting a parameter related to a frozen state and a non-frozen state of the fuel cell stack, determining whether the fuel cell stack is in the frozen state or in the non-frozen state based on the parameter, causing the warming-up circuit to warm up the fuel cell stack and not to warm up the water tank, when the fuel cell stack is in the frozen state, and causing the fuel cell stack to start power generation while preventing the water tank from supplying water for humidification to the humidifier, when the fuel cell stack has been warmed up to the non-frozen state.

The details as well as other features and advantages of this invention are set forth in the remainder of the specification and are shown in the accompanying drawings.

### BRIEF DESCRIPTION OF THE DRAWINGS

FIG. 1 is a schematic diagram of a fuel cell power plant according to this invention.

FIG. 2 is a flowchart showing a start-up control routine for a power plant executed by a controller according to this invention.

FIG. 3 is a diagram showing the relationship between energy consumed and water temperature during start-up of the power plant.

FIG. 4 is a diagram showing the relationship of a required start-up time and water temperature during start-up of the power plant.

FIG. 5 is a diagram showing the relationship of a water recovery rate and temperature of the power plant.

FIG. 6 is a schematic diagram of a fuel cell power plant according to a second embodiment of this invention.

FIG. 7 is a diagram showing the relationship between energy consumed and water temperature during start-up of the power plant according to the second embodiment of this invention.

FIG. 8 is a diagram showing the relationship of a required start-up time and water temperature during start-up of the power plant according to the second embodiment of this invention.

FIG. 9 is a schematic diagram of a fuel cell power plant according to a third embodiment of this invention.

FIGs. 10A and 10B are a flowchart showing a start-up control routine for the power plant executed by a controller according to the third embodiment of this invention.

FIG. 11 is a diagram showing the relationship between energy consumed and water temperature during start-up of the power plant according to the third embodiment of this invention.

FIG. 12 is a diagram showing the relationship of a required start-up time and water temperature during start-up of the power plant according to the third embodiment of this invention.

FIG. 13 is a diagram showing the relationship of a humidifying efficiency of a humidifier and a current density of a fuel cell in the power plant according to the third embodiment of this invention.

FIG. 14 is a schematic diagram of a fuel cell power plant according to a fourth embodiment of this invention.

FIG. 15 is a schematic diagram of a fuel cell power plant according to a fifth embodiment of this invention.

FIG. 16 is a diagram showing the relationship between a target stored water amount of a second water tank and external temperature of the power plant according to the fifth embodiment of this invention.

FIG. 17 is a flowchart showing a stored water amount control routine executed by a controller according to the fifth embodiment of this invention.

FIG. 18 is a schematic diagram of a fuel cell power plant according to a sixth embodiment of this invention.

### DESCRIPTION OF THE PREFERRED EMBODIMENTS

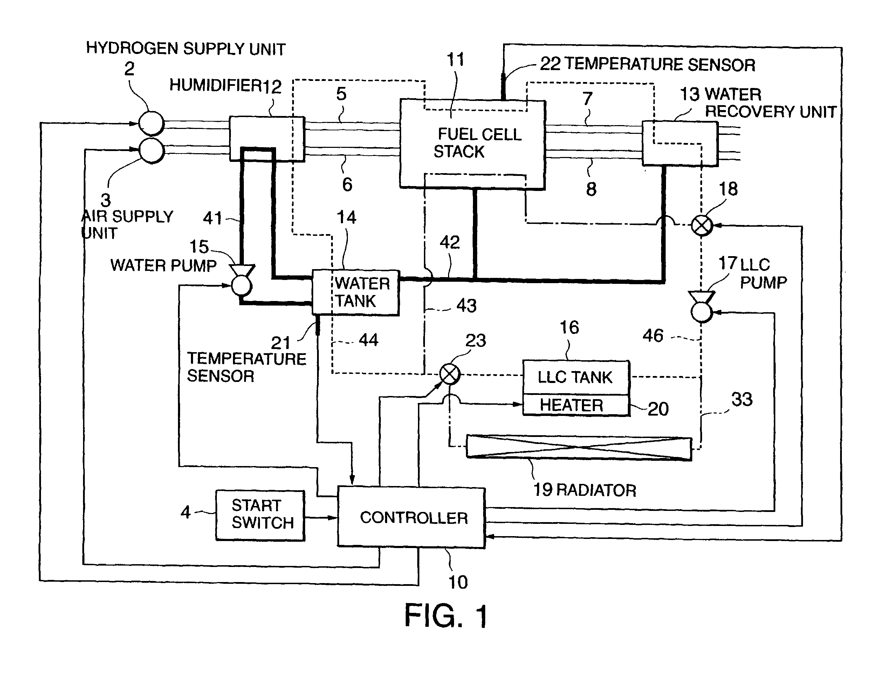

Referring to FIG. 1 of the drawings, a fuel cell power plant for driving a vehicle according to this invention is provided with a fuel cell stack 11 comprising a plurality of laminated fuel cells, a hydrogen supply unit 2 supplying hydrogen through a hydrogen supply passage 5 to an anode of the fuel cell stack 11 and an air supply unit 3 supplying oxygen in the form of air through an air supply passage 6 to a cathode of the fuel cell stack 11. The power generated in the fuel cell stack 11 is supplied through electrical wiring to a load such as an electric motor (not shown).

The hydrogen supply unit 2 may be either a type which supplies hydrogen or a type which supplies a hydrogen-rich gas obtained by reforming gasoline or methanol in a reformer. The air supply unit 3 comprises an air compressor or the like.

Electric power is generated between the electrodes by the reaction below between oxygen supplied to the cathode and hydrogen supplied to the anode. The reaction in the cathode below is an exothermic reaction.

Anode: H₂ → 2H⁺ + 2 e⁻
Cathode: 2H⁺ + 2 e⁻ + (1/2) O₂ → H₂O

The fuel cell power plant is provided with a humidifying system and a long-life coolant (LLC) recirculation system. LLC is an antifreeze including ethylene glycol. The humidifying system comprises a water recirculation passage 41, a recovery passage 42, a humidifier 12, a water tank 14, a water pump 15 and a water recovery unit 13.

The humidifier 12 is provided across the air supply passage 6 and the hydrogen supply passage 5 in order to replenish the levels of moisture in the electrolyte of the fuel cell stack. The humidifier 12 disperses a mist of water separately into hydrogen in the hydrogen supply passage 5 and air in the air supply passage 6. The humidifier 12 is connected to the water tank 14 by the recirculation passage 41. A water pump 15 is provided in the recirculation passage 41. The water pump 15 recycles water collected in the water tank 14 under pressure to the recirculation passage 41. Excess water in the humidifier 12 is recovered by the tank 14 through a recirculation passage 41.

Water is also produced in the fuel cell stack 11 as a result of chemical reactions between hydrogen and oxygen during power generation of the fuel cells. This water is recovered by the water tank 14 via the recovery passage 42. For the same reason, large amounts of steam are contained in the gaseous cathode effluent discharged from the cathode and the gaseous anode effluent discharged from the anode of the fuel cell stack 11. Consequently the water recovery unit 13 is provided across a discharge passage 7 for anode effluent and a discharge passage 8 for cathode effluent. The inner section of the water recovery unit 13 is provided with a water absorbing material. This water absorbing material absorbs steam contained in the discharge gas from the discharge passages 7, 8 and the water is recovered by the water tank 14 through the recovery passage 42. The water tank 14 is designed so that it is not damaged even when water freezes at below freezing point in the tank. In FIG. 1, the recovery passage 41 and the recovery passage 42 through which water flows are shown by the thick solid line.

The LLC recirculation system is provided with a first LLC passage 43, a second LLC passage 44 and a common LLC passage 46. The LLC common passage 46 is a passage extending from a valve 18 to a valve 23 in the figure. An LLC tank 16 and an LLC pump 17 are provided in the common LLC passage 46. A heater 20 for warming LLC is provided in the LLC tank 16. The heater 20 may be an electric heater or a heater using combustion of fuel.

The valve 18 is a three-way valve which selectively connects the common LLC passage 46 to the first LLC passage 43 or the second LLC passage 44. The valve 23 is a three-way valve which selectively connects a bypass passage 33 bypassing the LLC tank 16 or the common LLC passage 46 to the LLC passage 43 (44). A radiator 19 is provided in the bypass passage 33 in order to radiate heat absorbed by the LLC in the first LLC passage 43 or the second LLC passage 44.

In FIG. 1, the first LLC passage 43 which is shown by the dotted line performs recirculation operations of LLC only on the fuel cell stack 11. On the other hand, the second LLC passage 44 shown by the broken line in the figure performs recirculation operations of LLC on the water recovery unit 13, the fuel cell stack 11, the humidifier 12 and the water tank 14.

The change-over of the valves 18, 23, the operation of the water pump 15 and the LLC pump 17, the switching of the heater 20 and the operation of the hydrogen supply unit 2 and the air supply unit 3 are controlled by output signals from a controller 10.

The controller 10 performing the above control comprises a microcomputer provided with a central processing unit (CPU), a read-only memory (ROM), a random access memory (RAM) and an input/output interface (I/O interface). The controller 10 may also comprise a plurality of microcomputers.

Apart from controlling the normal operation of the fuel cell power plant, when starting the fuel cell power plant, the controller 10 also performs special start-up control in response to the temperature conditions during start-up.

The controller 10 is connected by a signal circuit to the following components in order to perform the above control. A start switch 4 commanding the start and termination of the operation of the fuel cell power plant, a temperature sensor 21 detecting the water temperature of the water tank 14, and a temperature sensor 22 detecting the temperature of the fuel cell stack 11. In FIG. 1, the signal circuit is shown by a thin solid line with an arrow.

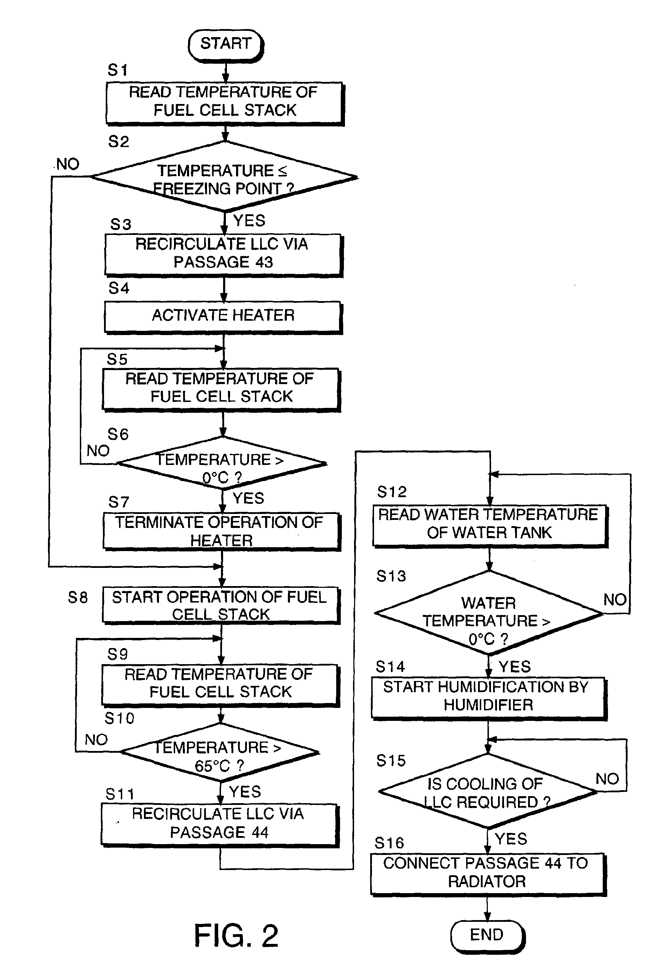

When a signal is input from the start switch 4 commanding start-up of power plant operation, the controller 10 executes the power plant start-up control routine shown in FIG. 2.

Referring to FIG. 2, in a step S1, the controller 10 firstly reads the temperature of the fuel cell stack 11 detected by the temperature sensor 22.

Then in a step S2, the controller 10 uses the temperature of the fuel cell stack 11 in order to determine whether or not moisture in the fuel cell stack 11 has frozen. More precisely, it is determined whether or not the detected temperature from the temperature sensor 22 is lower than freezing point.

In a step S3, the LLC recirculation system is activated and LLC is supplied to the first LLC passage 43. More precisely, the controller 10 operates the pump 17 and changes over the valve 18 so that LLC is discharged from the pump 17 and supplied to the first LLC passage 43. The valve 23 is changed over so that the first LLC passage 43 is connected to the LLC tank 16.

Then in a step S4, the heater is activated. As a result of the above process, LLC warmed by the heater 20 is supplied to the fuel cell stack 11 through the first LLC passage 43 for melting the ice in the fuel cell stack 11.

In a step S5, the controller 10 again reads the temperature of the fuel cell stack 11 detected by the temperature sensor 22.

In a step S6, it is determined whether or not the detected temperature of the temperature sensor 22 exceeds the freezing point.

When the detected temperature of the temperature sensor 22 does not exceed freezing point, the heating of the fuel cell stack 11 using LLC is continued. Reading the detected temperature of the temperature sensor 22 in the step S5 and the determination in the step S6 are repeated until the detected temperature exceeds freezing point.

When the detected temperature of the temperature sensor 22 exceeds freezing point, the controller 10 terminates the operation of the heater 20 in a step S7.

The process in the steps S3 to S7 completes the thawing of the fuel cell stack 11.

After the process in the step S7, the controller 10 executes the process in a step S8.

In the step S2, when the detected temperature from the temperature sensor 22 is not below freezing point, the process in the steps S3 to S7 is skipped and the process in the step S8 is performed.

In the step S8, the controller 10 causes the fuel cell stack 2 to start power generation by outputting signals to the air supply unit 3 and the hydrogen supply unit 2. However at this stage, the humidifier 12 can not perform the humidification of the hydrogen and air.

Thereafter in a step S9, the controller 10 once more reads the temperature of the fuel cell stack 11 detected by the temperature sensor 22.

Then in a step S10, the controller 10 determines whether or not the temperature of the fuel cell stack 11 exceeds 65 degrees C. A temperature of 65 degrees C is the temperature for determining whether or not warming up of the fuel cell stack 11 has been completed.

When the temperature of the fuel cell stack 11 does not exceed 65 degrees C, reading the detected temperature of the temperature sensor 22 in the step S9 and the determination in the step S10 are repeated until the temperature of the fuel cell stack 11 exceeds 65 degrees C while continuing the operation of the fuel cell stack 11. Since the reaction of hydrogen with oxygen in the fuel cell stack 11 is exothermic, the temperature of the fuel cell stack 11 after start-up increases as a result of the exothermic processes.

During this time, although humidification of hydrogen and air by the humidifier 12 is not performed, power generation operations of the fuel cell stack 11 are not adversely affected for the following reason.

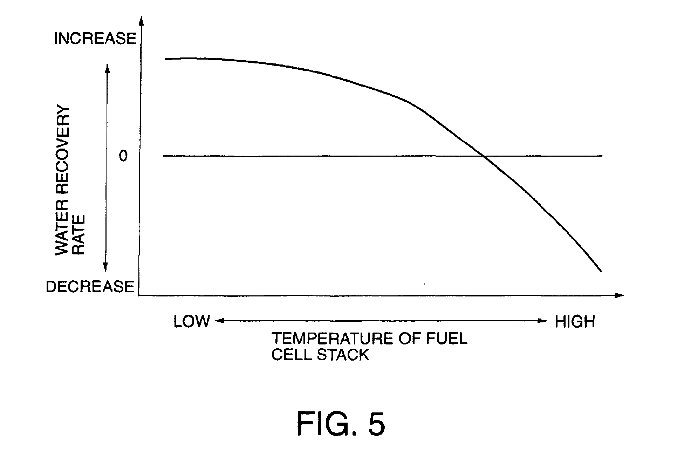

Referring to FIG. 5, the relationship of the temperature of the fuel cell stack 11 and the water recovery rate will be described. Water produced by power generation operations in the fuel cell stack 11 is discharged out of the fuel cell stack 11 as a part of cathode effluent. However a portion of this water remains in the fuel cell stack 11 and can be used in order to humidify the membrane electrolyte. The water recovery rate represents the rate of water amount employed for humidifying the membrane electrolyte among the water amount generated by the power generation by the fuel cell stack 11.

As shown in FIG. 5, the water recovery rate increases as the temperature of the fuel cell stack 11 decreases. Since the saturation vapor pressure is low at low temperatures, the resulting amount of water is hindered from transforming into steam and displays a tendency to remain in liquid phase in the fuel cell stack 11. The curve expressing the water recovery rate in the figure shows that the produced amount of water exceeds the amount of water used for humidifying the membrane electrolyte when the curve is above the line expressing a zero water recovery rate. In this manner, at low temperatures, it is possible to replenish the amount of water required for humidifying the membrane electrolyte only using the water produced as a result of power generation operations of the fuel cell stack 11.

Consequently it is possible for the fuel cell stack 11 to continue power generation operations without supplementing water used for humidifying operations from an external source until the warming up of the fuel cell stack 11 is completed. When the temperature of the fuel cell stack 11 in the step S10 exceeds 65 degrees C, the controller 10 changes over the valve 18 so that the LLC tank 17 is connected to the second LLC passage 44 in a step S11. Thereafter LLC discharged from the LLC pump 17 recirculates through the fuel cell stack 11, the humidifier 12 and the water tank 14 via the second LLC passage 44 and is returned to the LLC tank 16.

At this time, the heater 20 remains inactivated,. However since the water tank 14 is warmed up by LLC which has absorbed heat generated by the fuel cell stack 11, even when the water in the water tank 14 has frozen, ice in the water tank 14 is melted by the recirculation of LLC.

Then in a step S12, the controller 10 reads the water temperature of the water tank 14 detected by the temperature sensor 21.

In a step S13, the controller 10 determines whether or not the water temperature is higher than freezing point. When the water temperature is higher than freezing point, it means that moisture does not freeze in the water tank 14. When the water temperature is not higher than freezing point, the controller 10 continues to heat the water tank 14 by recirculating LLC to the second LLC passage 44. Reading of the water temperature in the step S12 and the determination of the water temperature in the step S13 are repeated while continuing heating of the water tank 14 by LLC until the water temperature becomes higher than freezing point. It is also preferable to compare the water temperature with a set temperature higher than freezing point such as two degrees C in the step S13 to perform an accurate confirmation that the water in the water tank 14 has melted.

In the step S13, when the water temperature is higher than freezing point, the controller 10 starts humidifying the air and the hydrogen with the humidifier 12 in a step S14. More precisely, the water pump 15 is operated. As a result, water is supplied to the humidifier 12. Water mist is respectively dispersed into the hydrogen in the hydrogen supply passage 5 and the air in the air supply passage 6.

Then in a step S15, it is determined whether or not cooling of the LLC is required on the basis of the temperature of the fuel cell stack 11 detected by the temperature sensor 22. When cooling of the LLC is not required, the determination in the step S15 is repeated until cooling of the LLC is required.

In the step S15, when cooling of the LLC is required, in a step S16, the controller 10 changes over the valve 23 so that the bypass passage 33 is connected to the second LLC passage 44. As a result, the radiator 19 radiates heat in the LLC from the second LLC passage 44 and reduces the temperature of the LLC. After the process in the step S16, the controller terminates the routine.

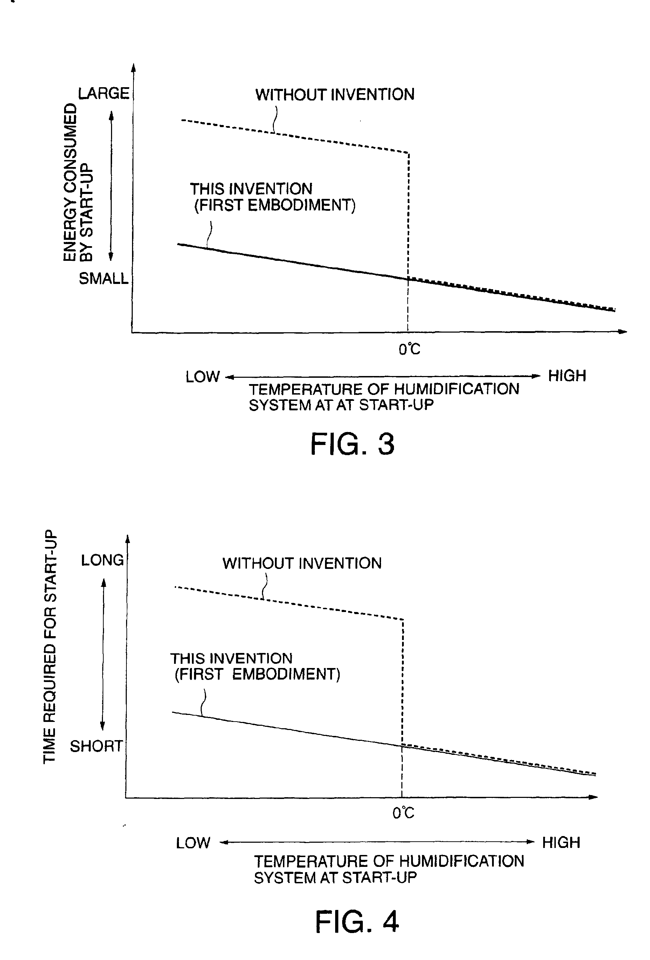

Referring to FIG. 3, the relationship between the energy consumed by start-up of the power plant and the water temperature of the humidifying system under the execution of the above power plant start-up control routine will be described. When the water temperature at start-up is lower than freezing point, there is the possibility that the water in the humidifying system is frozen. If humidifying operations are performed under these conditions, the ice in the humidifying system must be melted. Due to large amounts of latent heat of ice when it melts, a large amount of electrical energy or fuel will be consumed in order to melt the ice in the humidifying system.

The broken line in FIG. 3 shows the energy consumption amount in the above case. In this situation, the energy required for start-up increases conspicuously during start-up below zero degrees C.

In the fuel cell power plant according to this invention which performs the above control routine, humidifying of oxygen and hydrogen supplied to the fuel cell stack 11 is not performed immediately after starting power generation operations in the fuel cell stack 11. Thus after the water temperature of the water tank 14 exceeds zero degrees C due to exothermic reactions in the fuel cell stack 11, humidifying operations for oxygen and hydrogen are commenced. That is to say, in this fuel cell power plant, even when performing start-up operations at temperature below freezing point, the heater 20 is only used to melt ice in the fuel cell stack 11. Consequently the energy required for start-up is reduced to a low level irrespective of the temperature conditions during start-up as shown by the solid line in FIG. 3.

FIG. 4 shows that the required time when starting the fuel cell power plant at temperatures below freezing point increases when ice melting operations in the humidifier system are performing using external energy such as fuel or electrical energy. This is due to the fact that since the time required for ice melting processes in the humidifying system to be completed, there are dramatic increases in the time required for starting the plant as shown by the broken line in the figure.

When this type of control is performed in the fuel cell power plant according to this invention, power generation can be commenced in a short time irrespective of the temperature at start-up as shown by the solid line in the figure. This is due to the fact that only ice in the fuel cell stack 11 is melted.

In the start-up control routine shown in FIG. 2, power generation operation in the fuel cell stack 11 are not performed until the temperature in the fuel cell stack 11 detected by the temperature sensor 22 exceeds freezing point. However, when the output required by the fuel cell stack 11 is small, it is possible to commence power generation operations in the fuel cell stack 11 at temperatures below freezing point. This is because when the required output is small, the amount of water resulting from power generation is low and there is no possibility of water freezing and blocking the water recirculation passage in the fuel cell stack 11. Consequently it is possible to set the power generation start-up timing of the fuel cell stack 11 increasingly earlier in response to the required output of the fuel cell stack 11.

In this embodiment, the first LLC passage 43 and the second LLC passage 44 recirculate LLC separately in the fuel cell stack 11. However it is possible to integrate the LLC passages in the fuel cell stack 11 and to provide a valve which selectively connects the integrated LLC passage to the first LLC passage 43 or the second LLC passage 44. In this case, since the LLC passage in the fuel cell stack 11 are unified, the heat absorption efficiency of the LLC can be increased by increasing the contact surface area of the LLC with the fuel cell stack 11.

In this embodiment, a temperature sensor 21 detecting the water temperature is provided in the water tank 14. However it is possible to provide the temperature sensor for detecting water temperature in another position in the recirculation passage 41.

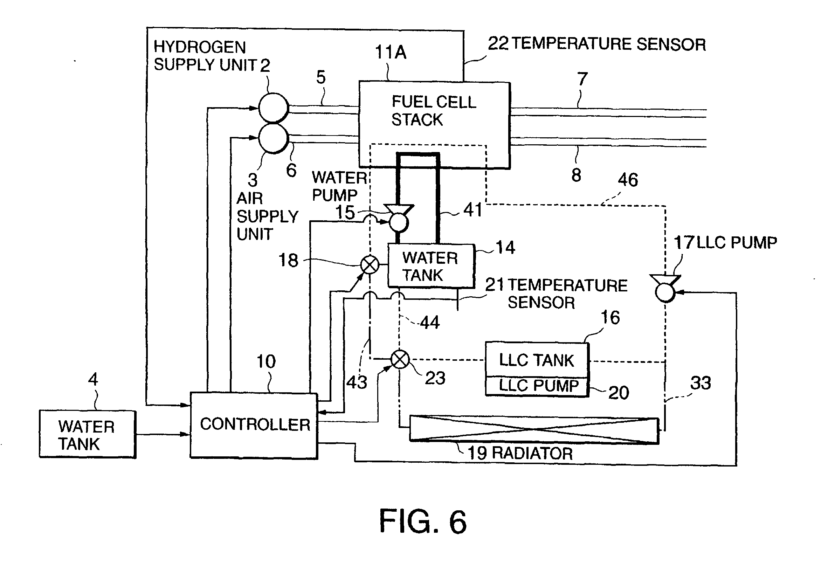

Referring to FIGs. 6 - 8, a second embodiment of this invention will be described.

In this embodiment, the invention is adapted to a fuel cell stack 11A provided with a humidifying and water recovery function. Water is produced by reactions between hydrogen and oxygen at the cathode of the fuel cell. A system of adsorbing this water with a water adsorbent material for use in humidifying the membrane electrolyte is disclosed in JP2000-323159 published by the Japanese Patent Office in 2000. A fuel cell stack 11A provided with an internal humidifying and water recovery function also requires replenishing water from an external source.

Referring to FIG. 6, in this embodiment, the humidifier 12, the water recovery unit 13 and the recovery passage 42 in the humidifying system according to the first embodiment are omitted. The recirculation passage 41 recirculates water through the humidifier in the fuel cell stack 11.

The valve 18 is disposed downstream of the fuel cell stack 11A relative to the flow of LLC discharged from the LLC pump 17. The common LLC passage 46 passes through the fuel cell stack 11A. The first LLC passage 43 directly connects the valve 18 and the valve 23 and the second LLC passage 44 extends from the valve 18 through the water tank 14 to the valve 23.

In this embodiment, the power plant start-up control routine executed by the controller 10 is the same as the routine shown in FIG. 2 according to the first embodiment. That is to say, when the temperature in the fuel cell stack 11A is below freezing point, LLC warmed by the heater 20 recirculates from the common LLC passage 46 to the first LLC passage 43. At first, only the ice in the fuel cell stack 11A is melted. Thereafter the heater 20 is placed in the OFF position after completion of ice melting operations and power generation operations by the fuel cell stack 11A are commenced. Once warm-up of the fuel cell stack 11A is completed, the valve 18 is changed over and LLC warmed by heat generated in the fuel cell stack 11A recirculates from the common LLC passage 46 to the second LLC passage 44 in order to melt ice in the water tank 14. When the temperature of the water tank 14 exceeds freezing point, the water pump 15 is operated and water for humidifying operations in the fuel cell stack 11A is replenished. Thereafter the valve 23 is changed over in response to the temperature of the fuel cell stack 11A and heat is radiated from LLC recirculating in the second LLC passage 44 using the radiator 19.

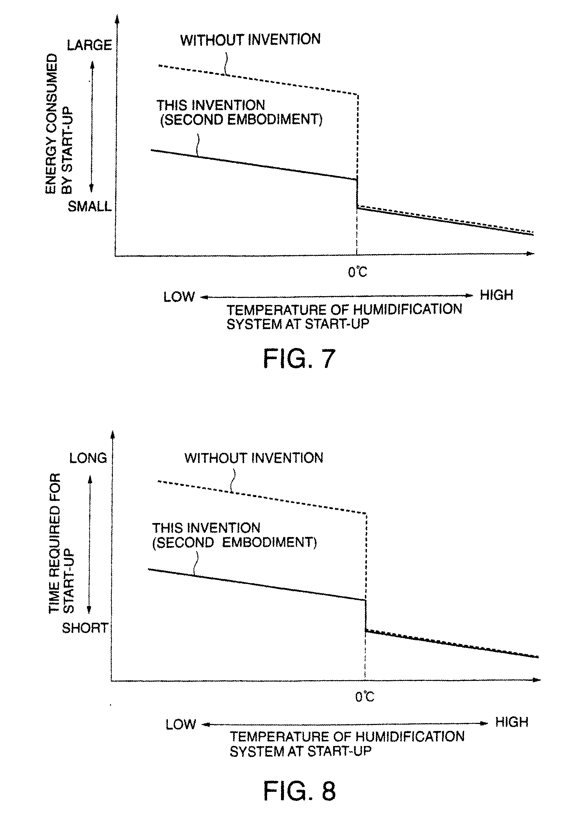

Referring to FIG. 7, in this embodiment, the relationship between the water temperature in the humidifying system when the fuel cell power plant is started and the energy consumed at start-up will be described. In the same manner as the fuel cell stack 11 described with reference to the first embodiment, latent heat in the ice means that the fuel cell stack 11A described with reference to this embodiment would consume large amounts of energy, as shown by the broken line in the figure, if melting operations for ice in the humidifying system were performed during start-up at temperatures below freezing point. However in this embodiment, humidifying of the hydrogen or air supplied to the fuel cell stack 11A is not performed until ice in the humidifying system has been melted using LLC warmed by heat generated in the fuel cell stack 11A. Consequently it is possible to suppress energy consumed during start-up at temperatures below freezing point to low levels as shown by the solid line in the figure.

When FIG. 7 is compared to FIG. 3 which shows the first embodiment, the energy consumed in start-up below freezing point according to the second embodiment is greater than the first embodiment. This is the result of providing the fuel cell stack 11A with a water recovery function.

The provision of a water recovery function using a water absorbent material means that a relatively large amount of water will be frozen in the fuel cell stack 11A before start-up operations below freezing point. Consequently in order to place the fuel cell stack 11A in a state enabling power generation, it is required to melt the ice using LLC warmed by the heater 20. As a result, the consumption of energy during start-up below freezing point is larger than the first embodiment.

Referring to FIG. 8, in this embodiment, the relationship between the water temperature of the humidifying system when starting the fuel cell power plant and the time required for start-up will be described. In the same manner as the first embodiment, this embodiment also enables considerable reductions in the time required to start the fuel cell power plant in comparison to melting ice in the humidifying system using LLC warmed by the heater 20. However since the amount of ice in the fuel cell stack 11A below freezing point is greater than that in the fuel cell stack 11 according to the first embodiment, the time required at start-up of the fuel cell power plant is longer than the required start-up time according to the first embodiment.

However, it is still possible to reduce the time and energy required at start-up by applying this invention to a fuel cell stack 11A provided with a water recovery and humidifying function.

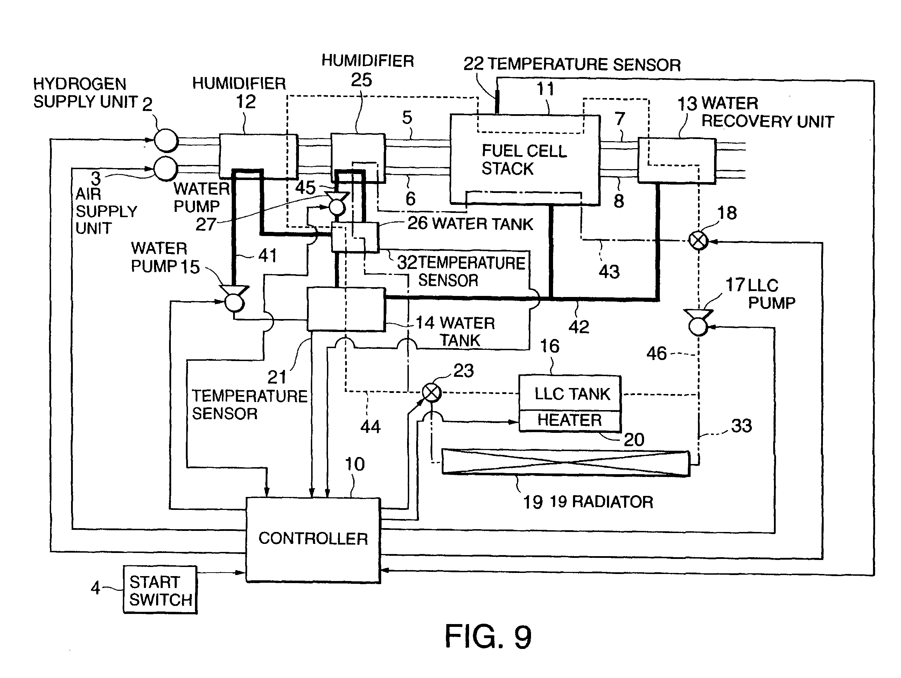

Next referring to FIGs. 9 - 13, a third embodiment of the invention will be described.

In this embodiment, a second humidifying system is provided in addition to the humidifying system in the first embodiment.

The second humidifying system comprises a second humidifier 25, a second water tank 26, a second water pump 27 and a second water recirculation passage 45 connecting these components.

The second humidifier 25 is provided across the hydrogen supply passage 5 and the air supply passage 6 between the humidifier 12 and the fuel cell stack 11. The second humidifier 25 disperses a water mist respectively into the air in the air supply passage 6 and into the hydrogen in the hydrogen supply passage 5.

The second water tank 26 is provided along the recirculation passage 41 extending from the humidifier 12 to the water tank 14. The recirculation passage 41 and the second recirculation passage 45 are connected through the second water tank 26. The second humidifying system has a smaller capacity than the first humidifying system. Consequently the water storage capacity in the second water tank 26 is smaller than the water storage capacity in the first water tank 14.

A temperature sensor 32 detecting the water temperature is provided in the second water tank 26. The water temperature detected by the temperature sensor 32 is input to the controller 10 as a signal.

The first LLC passage 43 passes through the second water tank 26 in addition to the fuel cell stack 11. The second LLC passage 44 passes through the water recovery unit 13, the fuel cell stack 11, the humidifier 12, the second water tank 26 and the first water tank 14.

The controller 10 controls the operation of the second water pump 27 in addition to controlling the units described with reference to the first embodiment.

In this embodiment, the humidifiers 12 and 25 are selectively used for start-up of the fuel cell power plant below freezing point and start-up of the fuel cell power plant at temperatures above freezing point.

The humidifier 12 may comprise a membrane-type, a bubbling-type or a porous-type membrane. Since these types of humidifiers perform humidifying operations using steam, they are characterized in that the quality of the gas after humidifying is high and the control of humidifying operations is highly accurate. A porous-type humidifying mechanism is disclosed in JP08-250130.

The second humidifier 25 uses a humidifier which performs sprinkler-type humidifying operations using a water shower or injection of water using a water injector.

In comparison to humidifying operations using the humidifier 12, this last type of humidifier causes a deterioration in the homogeneity of the gas after humidifying operation due to the fact that water comes into contact with gas before it is sufficiently vaporized. However this type of humidifier has a simple structure.

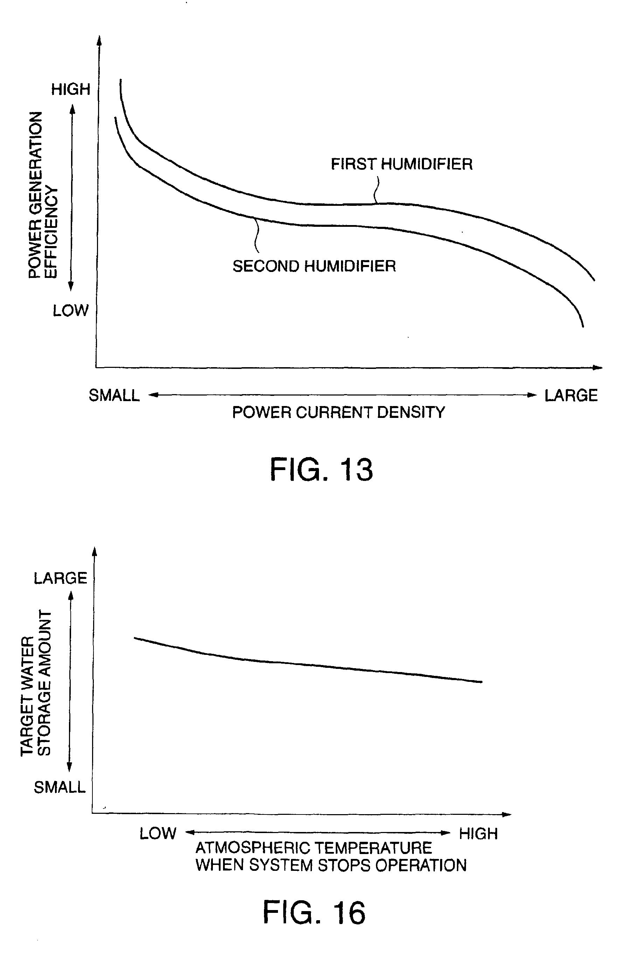

Referring to FIG. 13, the second humidifier 25 displays a lower power generation efficiency at an equal current density in the fuel cell stack 11 when compared with the first humidifier 12. That is to say, the second humidifier 25 displays lower performance although its structure is more simple.

The capacity of the second humidifier system is smaller than the capacity of the first humidifier system due to the fact that it is only used at start-up of the fuel cell power plant. When the fuel cell power plant is started below freezing point, the heater 20 heats the fuel cell stack 11 and the second humidifier system via the first LLC passage 43. After power generation operations have been commenced by the fuel cell stack 11, the first humidifier system is warmed up by the second LLC passage 44 using heat resulting from power generation operations. The heater 20 is not used in this embodiment to warm-up the large-capacity first humidifier system. Consequently energy consumption for thawing operations can be reduced.

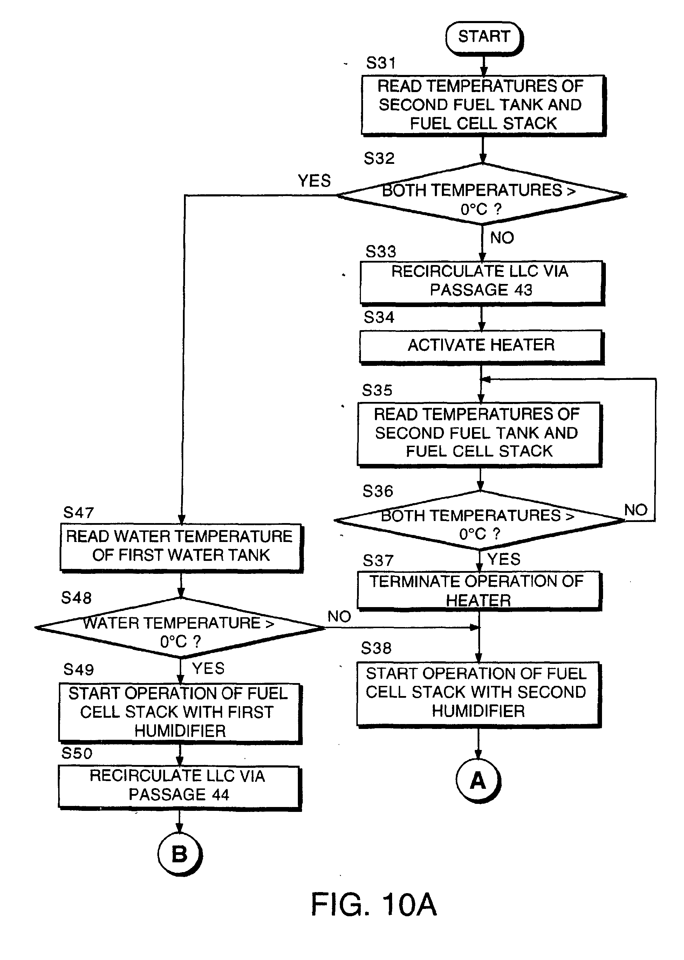

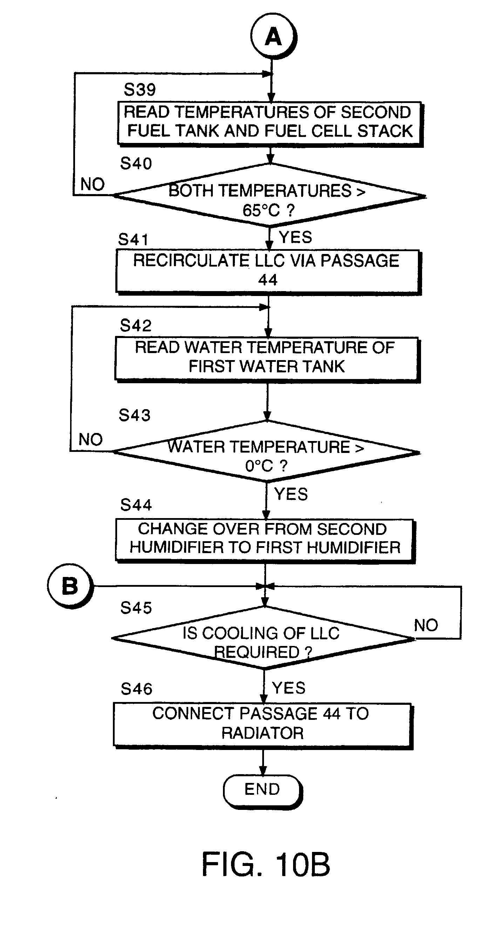

Next referring to FIGs. 10A and 10B, a power plant start-up control routine executed by the controller 10 according to this embodiment will be described. This routine is executed in place of the routine shown in FIG. 2 according to the first embodiment. The conditions for execution of this routine are the same as those for the routine shown in FIG. 2.

Firstly in a step S31, the controller 10 reads the water temperature of the second water tank 26 detected by the temperature sensor 32 and the temperature of the fuel cell stack 11 detected by the temperature sensor 22.

Then in a step S32, the controller 10 determines whether or not either the temperature of the fuel cell stack 11 or the temperature of the second water tank 26 is lower than freezing point. This step is for the purpose of determining whether or not freezing has occurred in a section of a component necessary for start-up of the fuel cell power plant. The accuracy of determinations based on the water temperature of the second water tank 26 and the temperature of the fuel cell stack 11 is high. The simplicity of this control routine makes it possible to determine the presence of freezing on the basis of either the temperature of the fuel cell stack 11 or the water temperature of the second water tank 26.

In a step S32, when either the temperature of the fuel cell stack 11 or the water temperature of the of the second water tank 26 is lower than freezing point, in a step S33, the controller 10 operates the valve 18 to connect the first LLC passage 43 to the LLC pump 17, operates the valve 23 to connect the first LLC passage 43 to the LLC tank 16. When these operations are completed, operation of the LLC pump 17 is started. Then in a step S34, the heater 20 is activated.

As a result of this process, LLC warmed by the heater 20 passes through the first LLC passage 43, recirculates through the second humidifier 25 and melts ice therein.

Next in a step S35, the controller 10 re-reads the water temperature of the water tank 26 and the temperature of the fuel cell stack 11.

Thereafter in a step S36, it is determined whether or not both the water temperature of the water tank 26 and the temperature of the fuel cell stack 11 are higher than freezing point. When this condition is not satisfied, the controller 10 continues the heating of the fuel cell stack 11 and the second humidifier 25 using LLC warmed by the heater 20. The step of reading the detected temperatures detected by the temperature sensor 22 and the temperature sensor 32 in the step S35 and the determination in the step S36 are repeated until the condition is satisfied.

When result of the determination in the step S36 is affirmative, the controller 10 inactivates the heater 20 in a step S37.

In the step S38, the controller 10 starts power generation using the fuel cell stack 11 by outputting signals to the air supply unit 3 and the hydrogen supply unit 2 to start supply of hydrogen and air to the fuel cell stack 11. At the same time, the second water pump 27 is operated and humidifying operations on hydrogen and air using the second humidifier 25 are commenced.

Thereafter in a step S39, the controller 10 once more reads the temperature of the fuel cell stack 11 and the water temperature of the water tank 26. Then in a step S40, the controller 10 determines whether or not both the temperature of the fuel cell stack 11 and the water temperature of the water tank 26 exceed 65 degrees C. A temperature of 65 degrees C is the temperature for determining whether or not warming up of the fuel cell stack 11 has been completed.

When either of the temperature of the fuel cell stack 11 and the water temperature of the water tank 26 does not exceed 65 degrees C, operation of the fuel cell stack 11 is continued. Reading of the detected temperatures in the step S39 and the determination in the step S40 are repeated until the temperature of the fuel cell stack 11 and the water temperature of the water tank 26 both exceed 65 degrees C. During this period, hydrogen and air which have been humidified by the second humidifier 25 are supplied to the fuel cell stack 11. The determination performed in the step S40 can be simplified in the same way as described with respect to the determination performed in the step S32. That is to say, it is possible to determine whether warm-up has been completed on the basis of only one of the water temperature of the water tank 26 and the temperature of the fuel cell stack 11.

In the step S40, when the water temperature of the water tank 26 and the temperature of the fuel cell stack 11 both exceed 65 degrees C, in a step S41, the controller 10 changes over the valve 18 so that the LLC pump 17 is connected to the second LLC passage 44. Thereafter LLC which is discharged from the pump 17 is recirculates through the water recovery unit 13, the fuel cell stack 11, the second water tank 26, the humidifier 12 and the water tank 14 via the second LLC passage 44 and is returned to the LLC tank 16. The LLC which recirculates through the second LLC passage 44 is warmed by the heat generated as a result of power generation by the fuel cell stack 11. Thereafter the humidifier 12 and the water tank 14 are warmed as the LLC recirculates through the second LLC passage 4.

Then in a step S42, the controller 10 reads the water temperature of the water tank 14 detected by the water temperature sensor 21.

In a step S43, it is determined whether or not the water temperature of the water tank 14 exceeds freezing point. When the water temperature in the water tank 14 is lower than freezing point, the controller 10 continues to recirculate LLC in the second LLC passage 44 and to perform power generation operations in the fuel cell stack 11. The steps of reading the water temperature in the step S42 and the determination in the step S43 are repeated until the water temperature in the water tank 14 becomes exceeds freezing point. In the step S43, when the water temperature in the water tank 14 exceeds freezing point, the controller 10 changes over the humidifying system from the second humidifying system to the first humidifying system. That is to say, the operation of the second water pump 27 is stopped and the operation of the first water pump 15 is started. Thereafter hydrogen supplied by the hydrogen supply unit 2 and air supplied by the air supply unit 3 are humidified by the humidifier 12 and supplied to the fuel cell stack 11. In this manner, it is possible to perform homogenous humidifying operations on larger amounts of air and hydrogen such that the fuel cell stack 11 can perform power generation under larger loads.

Then in a step S45, the controller 10 uses the temperature of the fuel cell stack 11 in order to determine whether or not cooling is required for the LLC which recirculates in the second LLC passage 44. When cooling of the LLC is not required, the determination in the step S45 is repeated until cooling of the LLC is required.

In the step S45, when it is determined that cooling of the LLC is required, in a step S46, the controller 10 changes over the valve 23 so that the bypass passage 33 is connected to the second LLC passage 44. As a result, the temperature of the LLC is reduced due to the fact that the radiator 19 radiates heat from the LLC in the second LLC passage 44. After the process in the step S46, the controller 10 terminates the routine.

In contrast, when both the temperature of the fuel cell stack 11 and the water temperature of the water tank 26 are not lower than freezing point in the step S32, in a step S47, the controller 10 reads the water temperature of the water tank 14 which is detected by the temperature sensor 21.

Then in a step S48, the controller 10 determines whether or not the water temperature of the water tank 14 is higher than freezing point. This shows that the moisture in the water tank 14 is not frozen. When the water temperature in the water tank 14 is below freezing point, the controller 10 performs processes after the step S38 above.

When the water temperature in the water tank 14 is higher than freezing point, in a step S49, the controller 10 starts power generation with the fuel cell stack 11 by outputting signals to the hydrogen supply unit 2 and the air supply unit 3. At the same time, the water pump 15 is operated and humidifying operations on the hydrogen and air are commenced using the humidifier 12.

Then in a step S50, the controller 10 operates the valve 18 of the LLC recirculation system to connect the second LLC passage 44 to the LLC pump 17, operates the valve 23 to connect the second LLC passage 44 to the LLC tank 16. When these operations have been completed, operation of the pump 17 is started. As a result, LLC which is warmed by heat generated by power generation of the fuel cell stack 11 recirculates in the second LLC passage 44.

In this manner, after the fuel cell stack 11 is started, the controller 10 performs the above described processing of the steps 45, 46.

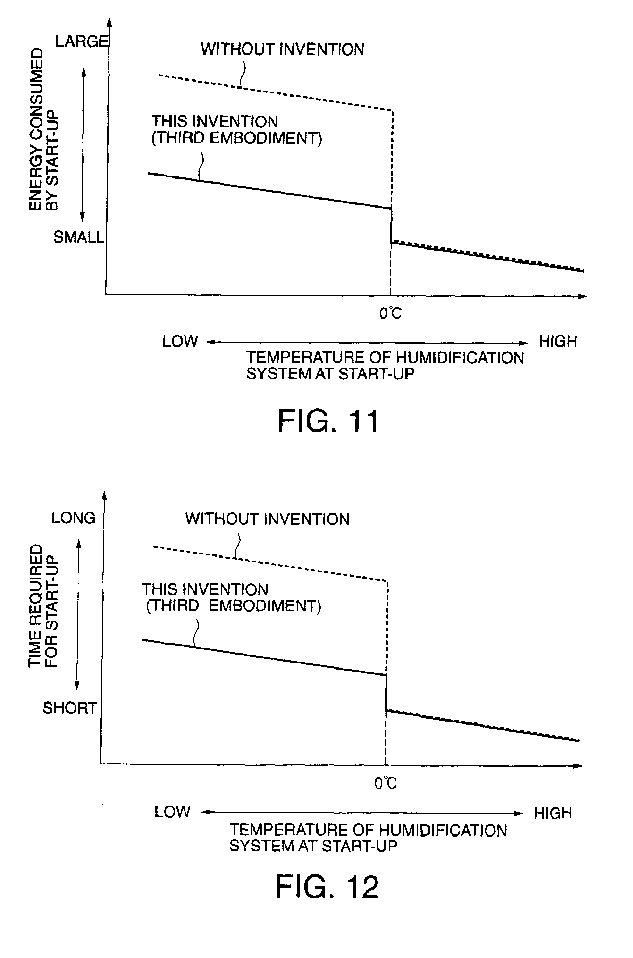

Next referring to FIG. 11, the relationship between energy consumed by start-up of the power plant and the water temperature of the humidifying system under the execution of this start-up control routine w:ill be described. The horizontal axis in the diagram represents the water temperature of the second humidifying system during start-up of the fuel cell power plant, that is to say, the water temperature detected by the temperature sensor 32. According to this embodiment, during start-up of the fuel cell power plant at temperatures lower than freezing point, since a small amount of water is melted, it is possible to reduce the energy consumption required for start-up to a level represented by the solid line in the figure in the same manner as the second embodiment. The broken line in the figure shows energy consumption when ice in the first humidifying system is melted using the heater 20.

FIG. 12 shows a comparison of the third embodiment with a situation in which ice in the first humidifying system including the large-capacity water tank 14 is melted using the heat from the heater 20. As shown in FIG. 12, this embodiment realizes a considerable reduction in the start-up time until power generation is commenced by the fuel cell stack 11.

This embodiment selectively applies the humidifier 12 and the humidifier 25 according to temperature conditions. As a result, efficient humidifying of air and hydrogen and thawing operations for the fuel cell power plant are realized. Depending on the construction of the fuel cell power plant, there may be a case where power generation is not possible without humidifying hydrogen and air, and therefore the first embodiment is not applicable. However, according to this embodiment, it is possible to humidify air and hydrogen immediately after starting the fuel cell power plant. Furthermore after completion of warm-up, it is also possible to obtain humidifying conditions which are suitable for high-load operation as a result of using the first humidifying system which has a higher humidifying performance. Since the water storage capacity of the second water tank 26, which is used for humidifying hydrogen and air at temperatures below freezing point, is smaller than the first water tank 14, the energy consumption of the heater 20 for ice melting operations on the second water tank 26 is much smaller than in the case where the heater 20 performs ice melting operations on the first water tank 14. In this embodiment, although the first LLC passage 43 and the second LLC passage 44 pass separately through the fuel cell stack 11 and the second water tank 26, it is possible to respectively provide an integrated LLC passage to the fuel cell stack 11 and to the second water tank 26, and selectively connect the first LLC passage 43 and the second LLC passage 44 to these integrated LLC passages.

In this case, a three-way valve is provided in the outlet of each of the integrated LLC passages in order to selectively connect the integrated passages to the first LLC passage 43 or the second LLC passage 44.

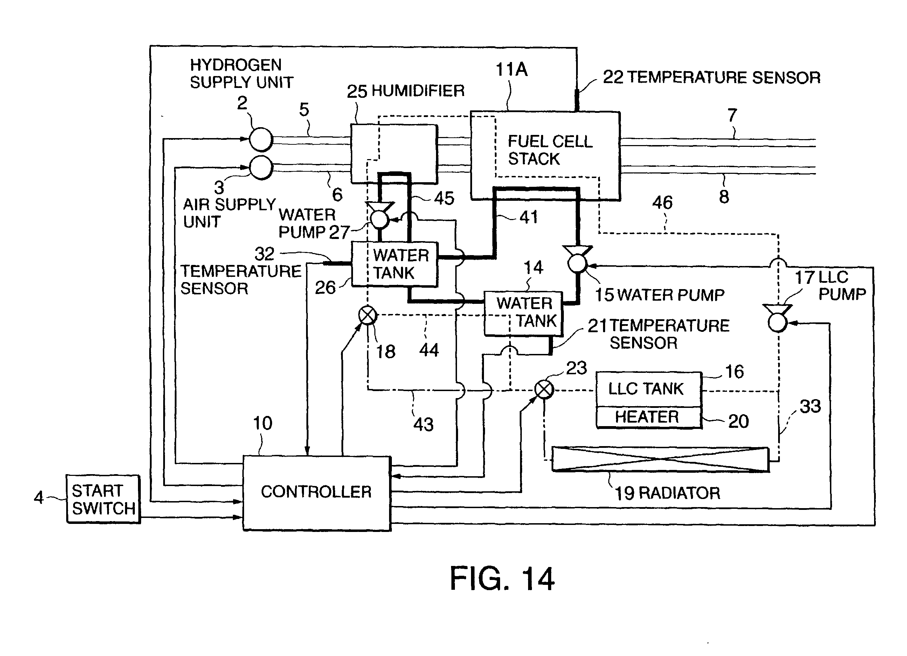

Referring to FIG. 14, a fourth embodiment of this invention will be described.

This embodiment is provided with a fuel cell stack 11A which is the same as that described in the second embodiment, a first humidifying system which corresponds to the humidifying system in the second embodiment and a second humidifying system. In the same manner as the humidifying system according to the second embodiment, the first humidifying system is provided with a recirculation passage 41 which recirculates water through the humidifying section in the fuel cell stack 11A and a water pump 15 which supplies water under pressure from the water tank 14 to the recirculation passage 41.

The second humidifying system is the same as the second humidifying system in the third embodiment. The second water tank 26, the second water pump 27 and the humidifier 25 are connected by the second recirculation passage 45. Although the humidifier 25 is constituted in the same manner as the second humidifier 25 in the third embodiment, since a first humidifier 12 is not provided in this embodiment, it is not termed a second humidifier and is simply referred to as "the humidifier". A temperature sensor 32 detecting the water temperature is provided in the second water tank 26.

The common LLC passage 46 in the LLC recirculation system passes through the fuel cell stack 11A, the humidifier 25 and the second water tank 26 to the valve 18. In the same manner as the second embodiment, the first LLC passage 43 is directly connected to the valve 18 and the valve 23. The second LLC passage 44 passes from the valve 18 through the water tank 14 to the valve 23.

In this embodiment, during normal operation of the fuel cell power plant, the membrane electrolyte is humidified using the humidifier in the fuel cell stack 11A. When starting the fuel cell power plant below freezing point, the humidifier 25 humidifies air and hydrogen supplied to the fuel cell stack 11A. In order to enable the humidification by the humidifier 25, ice in the second humidifying system is first melted by LLC warmed by the heater 20 before power generation operations are commenced.

In this embodiment, the power plant start-up control routine performed by the controller 10 is the same as the routine shown in FIGs. 10A and 10B with respect to the third embodiment. That is to say, when either the temperature of the fuel cell stack 11A or the water temperature of the second water tank 26 is lower than freezing point, ice in the water tank 26, the fuel cell stack 11A and the humidifier 25 is melted by recirculating LLC warmed by the heater 20 to the first LLC passage 43.

After the thawing operations, the fuel cell stack 11A is operated while hydrogen and air are humidified using the second humidifying system until warm-up of the fuel cell stack 11 is competed. Upon completion of the fuel cell stack 11, the valve 18 is changed over from the first LLC passage 43 to the second LLC passage 44 and thawing operations in the water tank 14 are then performed using heat of LLC warmed by power generation of the fuel cell stack 11. When the water temperature of the water tank 14 exceeds freezing point, the humidifying system is switched from the second humidifying system to the first humidifying system. Furthermore when it is necessary to cool the LLC circulating in the second LLC passage 44 as a result of the increasing temperature of the fuel cell stack 11, the valve 23 is changed over in order to connect the bypass passage 33 to the second LLC passage 44. This embodiment also does not employ heat from the heater 20 in order to melt ice in the large-water-capacity first water tank 14 when starting the fuel cell power plant at temperature below freezing point. Consequently it is possible to reduce the time and energy required for starting the fuel cell power plant.

Immediately after start-up, the fuel cell stack 11A is operated using the small-capacity second humidifying system and when warm-up is complete, it is operated using the large-capacity first humidifying system. This realizes efficient power generation operations of the fuel cell stack 11A.

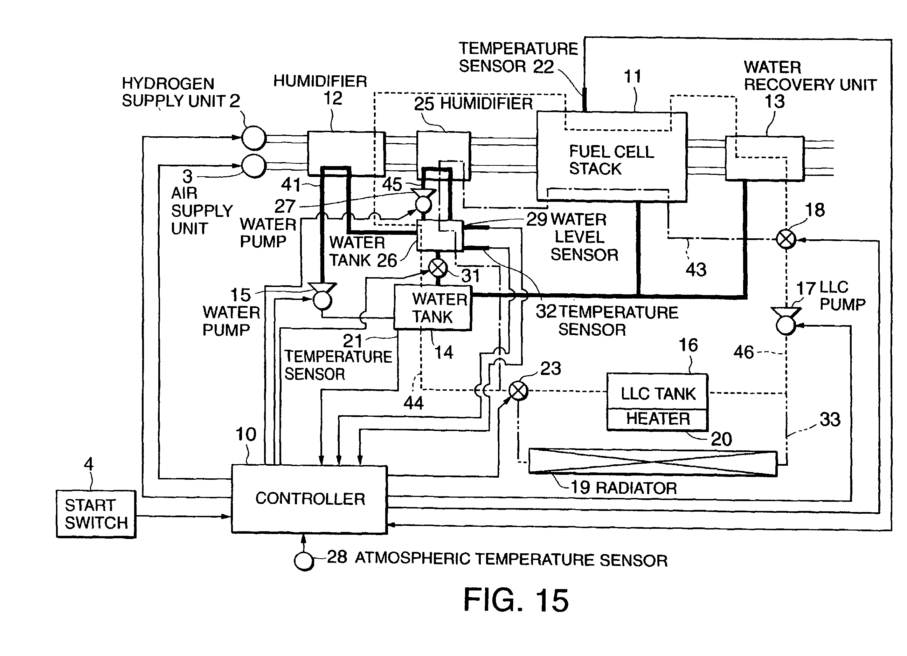

Referring to FIGs. 15 - 17, a fifth embodiment of this invention will be described.

In addition to the structure of the third embodiment, this embodiment is further provided with a cutoff valve 31 between the second water tank 26 and the first water tank 14.

The cutoff valve 31 cuts off the water flow between the second water tank 26 and the first water tank 14 via the water recirculation passage 41 in response to a signal output from the controller 10.

In this embodiment, the second water tank 26 is disposed in a higher position than the first water tank 14. As a result, when the cutoff valve 31 is opened, water stored in the second water tank 26 flows into the first water tank 14 due to gravity. When the second humidifying system humidifies air and hydrogen during start-up of the fuel cell power plant, the cutoff valve 31 remains closed. When the first humidifying system is used in the steps S44 and S49 in the routine shown in FIGs. 10A and 10B, the cutoff valve 31 is opened. During normal operation of the fuel cell power plant, the cutoff valve 31 is opened. Apart from the above operation, the power plant start-up control routine executed by the controller 10 is the same as the routine shown in FIGs. 10A and 10B according to the third embodiment.

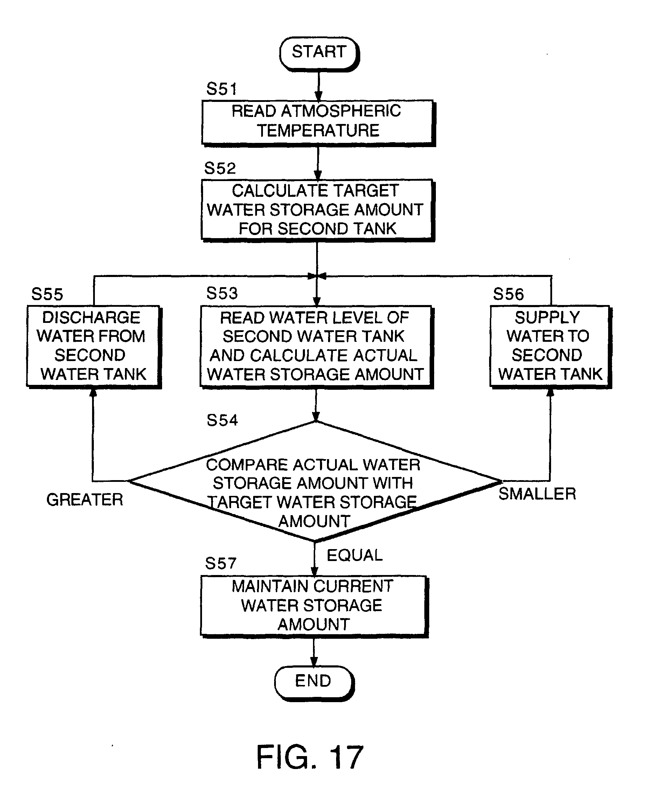

In this embodiment, the controller 10 regulates the water storage amount in the second water tank 26 by executing a water storage amount control routine as shown in FIG. 17 when the fuel cell power plant is not operated.

Consequently this embodiment is further provided with an atmospheric temperature sensor 28 detecting the atmospheric temperature and a water level sensor 29 detecting the water level in the second water tank 26. The detected data from the atmospheric temperature sensor 28 and the water level sensor 29 are input to the controller 10 as signals.

The water storage amount control routine shown in FIG. 17 triggers the termination of the operation of the fuel cell power plant, that is to say, the termination of outputting the operation signals to the water supply unit 2 and the hydrogen supply unit 3.

Firstly in a step S51, the controller 10 reads the atmospheric temperature detected by the atmospheric temperature sensor 28.

Then in a step S52, the controller 10 calculates a target water storage amount for the second water tank 26 based on the atmospheric temperature by looking up a map having the characteristics as shown in FIG. 16 which is prestored in the memory.

Referring to FIG. 16, the target water storage amount increases as the atmospheric temperature decreases. When starting up the fuel cell power plant, the time required for melting ice in the first humidifying system increases as the water temperature decreases. In contrast, the operation time for the second humidifying system increases. Accordingly, when operation of the fuel cell power plant is stopped, the target water storage amount for the second water tank 26 is set for a subsequent start-up operation based on the atmospheric temperature at that time.

Next in a step S53, the controller 10 reads the water level of the second water tank 26 detected by the water level sensor 29 and converts the water level to an actual water storage amount.

Then in a step S54, the controller 10 compares the actual water storage amount with the target water storage amount. When the actual water storage amount is greater than the target water storage amount, in a step S55, the cutoff valve 31 is opened to discharge a portion of the water in the second water tank 26 to the water tank 14. When the actual water storage amount is smaller than the target water storage amount, in a step S56, the cutoff valve 31 is closed and the first pump 15 is operated in order to supply water from the first water tank 14 to the second water tank 26.

The controller 10 repeats the process in the step S55 or S56 in response to the comparison of the actual water storage amount with the target water storage amount until the actual water storage amount coincides with the target water storage amount.

As a result of this process, when the actual water storage amount coincides with the target water storage amount in the step S54, the controller 10 performs a retention operation for the current water storage amount in a step S57. In the practice, it is possible to regard the actual water storage amount as coinciding with the target water storage amount when the difference of the actual water storage amount and the target water storage amount is less than 5% of the target water storage amount for example.

The process in the step S57 means that the valve 31 is closed when the valve 31 was open and that the operation of the first pump 15 is terminated when the first pump 15 was operating.

After the process in the step S57, the controller 10 terminates the routine.

In this embodiment, the water storage amount in the second water tank 26 is varied in response to the atmospheric temperature when the preceding operation of the fuel cell power plant was terminated. Consequently when the fuel cell power plant is restarted on an immediately subsequent occasion, the possibility of a shortage in the water storage amount in the second water tank 26 is reduced. Conversely the possibility of an excess water storage amount resulting in an increase in energy consumption during melting operations is also decreased. As a result, it is possible to perform restarting of the fuel cell power plant under preferred conditions.

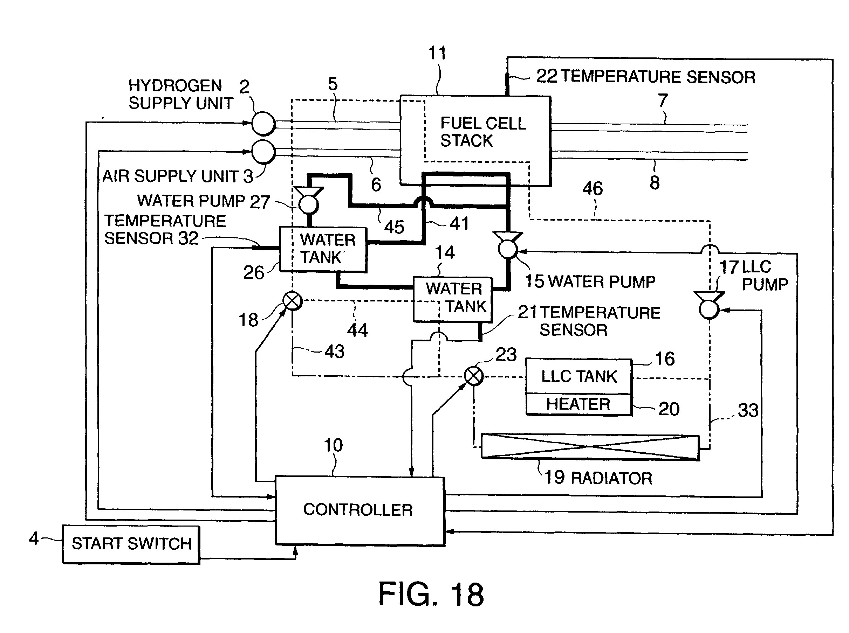

Referring to FIG. 18, a sixth embodiment of this invention will be described.

The fuel cell power plant according to this embodiment is provided with a humidifying system and a fuel cell stack 11A which are the same as those in the second embodiment. In addition, a priming water supply system is provided in order to supply water to the fuel cell stack 11A.

The priming water supply system is a system in which the second humidifier 25 is omitted from the second humidifying system in the third embodiment. The second water tank 26 and the second water pump 27 are connected through the recirculation passage 45 in parallel to the main water supply system comprising the first water tank 14 and the first water pump 15.

The first embodiment and the second embodiment are provided with a single humidifying system. The third to fifth embodiments are provided with a first humidifying system for normal operation and a second humidifying system for start-up operation. However this embodiment as described above is characterized in that humidifying operations are performed only using the humidifying section in the fuel cell stack 11A. Water supply to the humidifying section is performed from different water tanks 14, 26 depending on normal operation or start-up operation.

The capacity of the second water tank 26 used for start-up operations is smaller than the capacity of the first water tank 14 used for normal operation. A temperature sensor 32 detecting the water temperature is provided in the second water tank 26.

The common LLC passage 46 in the LLC recirculation system passes through the fuel cell stack 11A and the second water tank 26 to the valve 18. In the same manner as the second embodiment, the first LLC passage 43 directly connects the valve 18 and the valve 23. The second LLC passage 44 passes from the valve 18 through the water tank 14 to the valve 23.

In this embodiment, the power plant start-up control routine performed by the controller 10 is the same as the routine in FIGs. 10A and 10B performed in the third embodiment. That is to say, when either the temperature of the fuel cell stack 11A or the water temperature of the second water tank 26 is lower than freezing point, ice in the fuel cell stack 11A and the second water tank 26 is melted by recirculating LLC warmed by the heater 20 through the first LLC passage 43.

After the melting operations are completed, water from the second water tank 26 is supplied to the humidifier section of the fuel cell stack 11A using the second water pump 27 in order to operate the fuel cell stack 11A. When warm-up of the fuel cell stack 11A is completed, the valve 18 is switched from the first LLC passage 43 to the second LLC passage 44 in order to melt ice in the water tank 14.

When the water temperature in the water tank 14 exceeds freezing point, the operation of the first water pump 15 is started and the operation of the second water pump 27 is stopped. In this manner, the water supply source to the humidifier section in the fuel cell stack 11A is changed over from the second water tank 26 to the first water tank 1. Furthermore when it is necessary to cool the LLC which is recirculating in the second LLC passage 44 as a result of temperature increases in the fuel cell stack 11, the valve 23 is operated to connect the bypass passage 33 t:o the second LLC passage 44.

According to this embodiment, in the same manner as the third embodiment, the fuel cell stack 11 can perform efficient power generation operations using hydrogen and air which are humidified immediately after starting the fuel cell power plant. On the other hand, at temperatures below freezing point, since ice melting operations on the first water tank 14 which has a large water storage capacity are not performed using heat from the heater 20, it is possible to reduce the energy and the time required for start-up of the fuel cell power plant.

The contents of Tokugan 2002-100999 with a filing date of April 3, 2002 in Japan, are hereby incorporated by reference.

Although the invention has been described above by reference to certain embodiments of the invention, the invention is not limited to the embodiments described above. Modifications and variations of the embodiments described above will occur to those skilled in the art, in light of the above teachings.

The embodiments of this invention in which an exclusive property or privilege is claimed are defined as follows:

## Claims

1. A fuel cell power plant comprising:
a fuel cell stack (11, 11A) performing power generation in response to a supply of gaseous material;
a humidifier (11A, 12) humidifying the gaseous material;
a water tank (14) supplying water for humidification to the humidifier (11A, 12);
a warming-up circuit (17, 18, 20, 23, 43, 44) capable of independently warming up the fuel cell stack (11, 11A) and the water tank (14);
first means (22) for detecting a parameter related to a frozen state and a non-frozen state of the fuel cell stack (11, 11A);
second means (10, S2) for determining whether the fuel cell stack (11, 11A) is in the frozen state or in the non-frozen state based on the parameter;
third means (10, S3, S4) for causing the warming-up circuit (17, 18, 20, 23, 43, 44) to warm up the fuel cell stack (11, 11A) and not to warm up the water tank (14), when the fuel cell stack (11, 11A) is in the frozen state; and
fourth means (10, S6, S8) for causing the fuel cell stack (11, 11A) to start power generation while preventing the water tank (14) from supplying water for humidification to the humidifier (11A, 12), when the fuel cell stack (11, 11A) has been warmed up to the non-frozen state.

2. The fuel cell power plant as defined in Claim 1, wherein the first means (22) comprises a sensor (22) detecting a parameter related to a frozen state and a non-frozen state of the fuel cell stack (11, 11A), and the second means (10, S2), the third means (10, S3, S4) and the fourth means (10, S6, S8) comprises a controller (10) functioning to determine whether the fuel cell stack (11, 11A) is in the frozen state or in the non-frozen state based on the parameter (S2), cause the warming-up circuit (17, 18, 20, 23, 43, 44) to warm up the fuel cell stack (11, 11A) and not to warm up the water tank (14), when the fuel cell stack (11, 11A) is in the frozen state (S3, S4), and cause the fuel cell stack (11, 11A) to start power generation while preventing the water tank (14) from supplying water for humidification to the humidifier (11A, 12), when the fuel cell stack (11, 11A) has been warmed up to the non-frozen state (S6, S8).

3. The fuel cell power plant as defined in Claim 2, wherein the warm-up circuit (17, 18, 20, 23, 43, 40) comprises a first warm-up circuit (43) which warms up the fuel cell stack (11, 11A) with a heat generated by a heater (20), a second warm-up circuit (44) which warms up the water tank (14) with a heat generated by the power generation in the fuel cell stack (11, 11A), and a change-over mechanism (18) which selectively applies the first warm-up circuit (43) and the second warm-up circuit (44) for warming up of the power plant, and the controller (10) further functions to cause the change-over mechanism (18) to apply the first warm-up circuit (43) when the fuel cell stack (11, 11A) is in the frozen state (S3, S33).

4. The fuel cell power plant as defined in Claim 3, wherein the controller (10) further functions not to cause the heater (20) to stop generating heat when the fuel cell stack (10) has been warmed up to the non-frozen state (S7, S37).

5. The fuel cell power plant as defined in any one of Claim 2 through Claim 4, wherein the parameter detecting sensor (21, 22, 32) comprises a temperature sensor (22) detecting a temperature of the fuel cell stack (11, 11A), and the controller (10) further functions to determine whether or not the fuel cell stack (11, 11A) has been warmed up to the non-frozen state when the temperature of the fuel cell stack (11, 11A) has risen beyond a predetermined temperature (S6, S36).

6. The fuel cell power plant as defined in Claim 3, wherein the fuel cell power plant further comprises a sensor (22) detecting a temperature of the fuel cell stack (11, 11A), and the controller (10) further functions to determine whether or not warm-up of the fuel cell stack (11, 11A) has been completed based on the temperature of the fuel cell stack (11, 11A) (S10, S40), and cause the change-over mechanism (18) to apply the second warm-up circuit (44) when warm-up of the fuel cell stack (11, 11A) has been completed (S11, S41).

7. The fuel cell power plant as defined in any one of Claim 2 through Claim 6, wherein the fuel cell power plant further comprises a water temperature sensor (21) detecting a water temperature of the water tank (14), and the controller (10) functions to determine whether the water tank (14) is in a frozen state or in a non-frozen state based on the water temperature of the water tank (14) (S13, S43), and cause the water tank (14) to start supplying water for humidification to the humidifier (11A, 12) when the water tank (14) has come into the non-frozen state from the frozen state (S14, S44).

8. The fuel cell power plant as defined in any one of Claim 2 through Claim 7, wherein the fuel cell power plant further comprises a supply unit (2, 3) supplying the gaseous material to the fuel cell stack (11, 11A), and the controller (10) further functions to cause the fuel cell stack (11, 11A) to start power generation by causing the supply unit (2, 3) to supply the gaseous material to the fuel cell stack (11, 11A) (S8).

9. The fuel cell power plant as defined in Claim 6, wherein the second warm-up circuit (44) comprises a fluid passage (44) which recirculates a heat conductive fluid between the fuel cell stack (11, 11A) and the water tank (14), a radiator (19) cooling the heat conductive fluid, and a valve (23) to cause the heat conductive fluid in the fluid passage to flow through the radiator (19), and the controller (10) further functions to determine whether or not cooling of the heat conductive fluid is required based on the temperature of the fuel cell stack (11, 11A) (S15, S45), and to operate the valve (23) to cause the heat conductive fluid in the fluid passage to flow through the radiator (19) when cooling of the heat conductive fluid is required (S16, S46).

10. The fuel cell power plant as defined in any one of Claim 1 through Claim 9, wherein the humidifier (11A) is integrated inside the fuel cell stack (11A).

11. The fuel cell power plant as defined in Claim 3, wherein the fuel cell power plant further comprises a second water tank (26) supplying water for humidification to the humidifier (11A, 12), the second water tank (26) having a smaller capacity than the first water tank (14), the first warm-up circuit (43) further functions to warm up the second water tank (26) together with the fuel cell stack (11, 11A), and the controller (10) further functions to cause the second water tank (26) to start supplying water for humidification to the humidifier (11A, 25) when the fuel cell stack (11, 11A) has been warmed up to the non-frozen state (S38).

12. The fuel cell power plant as defined in Claim 3, wherein the fuel cell power plant further comprises a second humidifier (25), and a second water tank (26) supplying water for humidification to the second humidifier (25), the second water tank (26) having a smaller capacity than the first water tank (14), the first warm-up circuit (43) further functions to warm up the second water tank (26) together with the fuel cell stack (11, 11A), and the controller (10) further functions to cause the second water tank (26) to start supplying water for humidification to the second humidifier (25) when the fuel cell stack (11, 11A) has been warmed up to the non-frozen state (S38).

13. The fuel cell power plant as defined in Claim 12, wherein the first humidifier (11A, 12) comprises one of a membrane-type humidifier, a bubbling-type humidifier and a porous-type humidifier, and the second humidifier (25) comprises any one of an injector-type humidifier and a sprinkler-type humidifier.

14. The fuel cell power plant as defined in any one of Claim 11 through Claim 13, wherein the parameter detecting sensor (21, 22, 32) comprises a temperature sensor (22) detecting a temperature of the fuel cell stack (11, 11A), and a water temperature sensor (32) detecting a water temperature of the second water tank (26), and the controller (10) further functions to determine that the fuel cell stack (11, 11A) has been warmed up to the non-frozen state when both the temperature of the fuel cell stack (11, 11A) and the water temperature of the second water tank (26) have increased beyond a predetermined temperature.

15. The fuel cell power plant as defined in Claim 14, wherein the controller (10) further functions to determine whether or not warm-up of the fuel cell stack (11, 11A) has been completed based on the temperature of the fuel cell stack (11, 11A) and the water temperature of the second water tank (26) (S40), and to cause the change-over mechanism (18) to apply the second warm-up circuit (44) when warm-up of the fuel cell stack (11, 11A) has been completed (S41).

16. The fuel cell power plant as defined in Claim 11 or Claim 12, wherein the fuel cell power plant further comprises an atmospheric temperature sensor (28) detecting an atmospheric temperature, and the controller (10) further functions to increase a water storage amount in the second water tank (26) the lower the atmospheric temperature when the fuel cell stack (11, 11A) has stopped power generation (S54).

17. The fuel cell power plant as defined in Claim 16, wherein the fuel cell power plant further comprises a sensor (29) detecting a water storage amount in the second water tank (26), and the controller (10) further functions to set a target water storage amount for the second water tank (26) based on the atmospheric temperature when the operation of the fuel cell power plant has stopped (S52), and to cause water to flow between the first water tank (14) and the second water tank (26) until the water storage amount in the second water tank (26) becomes equal to the target water storage amount (S55, S56).

18. A control method for fuel cell power plant, the fuel cell plant comprising a fuel cell stack (11, 11A) performing power generation in response to a supply of gaseous material, a humidifier (11A, 12) humidifying the gaseous material, a water tank (14) supplying water for humidification to the humidifier (11A, 12), and a warming-up circuit (17, 18, 20, 23, 43, 44) capable of independently warming up the fuel cell stack (11, 11A) and the water tank (14), the method comprising:
detecting a parameter related to a frozen state and a non-frozen state of the fuel cell stack (11, 11A);
determining whether the fuel cell stack (11, 11A) is in the frozen state or in the non-frozen state based on the parameter (S2);
causing the warming-up circuit (17, 18, 20, 23, 43, 44) to warm up the fuel cell stack (11, 11A) and not to warm up the water tank (14), when the fuel cell stack (11, 11A) is in the frozen state (S3, S4); and
causing the fuel cell stack (11, 11A) to start power generation while preventing the water tank (14) from supplying water for humidification to the humidifier (11A, 12), when the fuel cell stack (11, 11A) has been warmed up to the non-frozen state (S6, S8).
